# EUROPEAN PATENT APPLICATION

(11) **EP 4 531 339 A1**
(43) Date of publication of application: **02.04.2025**
(21) Application number: 24201922.2
(22) Date of filing: 23.09.2024
(51) Int. Cl.: H04L 9/40, H04W 12/122

(54) **DETECTION OF MAC SPOOFING**

(30) Priority: 28.09.2023 IN 202341065192; 25.01.2024 US 202418422558
(71) Applicant: Cambium Networks Ltd, Ashburton, Devon TQ13 7UP (GB)
(72) Inventor: ANKAIAH, Shashi Hosakere, 560037 Bangalore (IN); ATREYA, Vivek Lakshminarayana, 560037 Bangalore (IN); MIRANDA, Trevor, San Francisco, 60008 (US)
(74) Representative: EIP

(57) **Abstract**

A network management device for controlling one or more networks, and a computer-implemented method for the network management device is provided. The method involves monitoring network traffic to generate device fingerprint data, the device fingerprint data including a plurality of records, each record associated with one of a plurality of records, each record associated with one or a plurality of devices in the one or more networks and including a respective MAC address and a set of one or more characteristics associated with a respective device. The method involves determining whether two or more devices are utilizing a common MAC address based at least on the device fingerprint data, and performing a predetermined action dependent on the determining whether two or more devices are utilizing the common MAC address.

## Description

### BACKGROUND OF THE INVENTION

### Field of the Invention

The present disclosure relates to computer network management and in particular, but not exclusively, to detecting and/or mitigating Media Access Control address spoofing in computer networks.

### Description of the Related Technology

A MAC (Media Access Control) address, also referred to as hardware address or a physical address, is a unique identifier assigned to a network interface controller (NIC), typically by a manufacturer. It is used to uniquely identify devices on a network at the data link layer of the network protocol stack.

A MAC address is a 48-bit (6-byte) address, typically represented as six pairs of hexadecimal digits separated by colons or hyphens (e.g., 00:1A:2B:3C:4D:5E). The first half of the MAC address represents the manufacturer or vendor identifier, while the second half is a unique identifier assigned to the specific network interface.

MAC addresses are used for devices to communicate on a local area network (LAN). They are used by the *Ethernet protocol* to ensure that data is sent to the correct destination device. When a device sends data packets, it includes the MAC address of the intended recipient, allowing the network switched and routers to forward the packets appropriately.

MAC addresses are specific to the data link layer and are typically not routable across different networks. In contrast, IP (Internet Protocol) addresses are used for network communication at the network later and are routable across different networks.

Security is an important area of network management. Ensuring that access to networks, and in particular local area networks, is secure is essential for protecting users and their devices from data leaks and other malicious attacks.

### SUMMARY

According to a first aspect of the present disclosure there is provided a computer-implemented method for a network management device configured to control one or more networks, the computer-implemented method comprising: monitoring network traffic to generate device fingerprint data, the device fingerprint data including a plurality of records, each record associated with one of a plurality of devices in the one or more networks and including a respective MAC address and a set of one or more characteristics associated with a respective device; determining whether two or more devices are utilizing a common MAC address based at least on the device fingerprint data; and performing a predetermined action dependent on the determining whether two or more devices are utilizing the common MAC address.

In this way it is possible to accurately identify when MAC spoofing occurs and for the network management device to take actions to restrict unauthorized devices from using MAC addresses associated with other, legitimate, devices in the one or more networks. Using the device fingerprint data as the basis for determining whether there really are two separate devices using the same MAC address reduces the likelihood of a false positive which may occur when the characteristics of a device change slightly such as after software running on the device is updated.

Monitoring network traffic to generate the device fingerprint data may include deriving the MAC address and set of characteristics associated with a said device of the plurality of devices from one or more messages received from said device, and the method may include at least one of: performing passive scans of devices attached to the one or more networks to obtain messages from said devices, wherein a passive scan involves receiving communication transmitted between two or more devices in the one or more networks; and performing active scans of the devices attached to the one or more networks to obtain messages from said devices, wherein an active scan involves: transmitting a message to a said device in the one or more networks to trigger a response; and receiving the respond from the said device in the one or more networks.

Performing passive and active scans enables the network management device to maintain accurate and updating device fingerprint data representing a current state of the devices connected in the one or more networks and their characteristics. Passive scans use up lower network bandwidth, however, are restricted as they only provide information which the devices are communicating in normal operation. Active scans use up more network bandwidth but can be more targeted and request specific information from a device. Both passive and active scans may be performed periodically, at regular intervals, and/or in response to detected changes in the network such as device attach, authorization requests, device disconnect, and so forth.

If it is determined that two or more devices are utilizing the common MAC address, the predetermined action may include at least one of: preventing at least one device that is utilizing the common MAC address from communicating with other devices in the one or more networks; preventing all devices that are utilizing the common MAC address from communicating with other devices in the network; or generating an alert signal representative of an outcome of the determining whether the common MAC address is utilized by two or more devices.

In this way, malicious devices which are spoofing a MAC address may be effectively booted from the network as they are unable to receive communications from any other devices in the network. An alert signal may be provided as an alternatively, or additionally to the prevention of communication with devices using the common MAC address. The alert signal can be used to monitor the performance of the network management device, identifying the frequency and severity of malicious MAC spoofing attacks, or as a prompt for an administrator to determine whether they would like to override or manually control the handling of MAC spoofing attacks in the one or more networks.

The one or more networks may each include at least one network device configured to connect the devices in the one or more networks, and preventing devices utilizing the common MAC address from communicating with other devices in the one or more networks may comprise instructing the at least one network device to: restrict communication that are received from devices utilizing the common MAC address; and restrict communications that are directed to devices utilizing the common MAC address.

Instructing network devices such as access points and switches to enact the control protocols for restricting communication with devices using spoofed MAC addresses, allows the control may be distributed and democratized, leading to increased performance, and more secure restriction of communication with malicious devices.

The method may further comprise monitoring network traffic to determine MAC address usage statistics including at least one of: an indication of times at which MAC addresses have been used in the one or more networks; and an indication of which network MAC addresses are using in, and determining whether two or more devices are utilizing the common MAC address may be additionally based on the MAC address usage statistics.

Using MAC address usage statistics may provide increased accuracy in MAC spoofing detection. There are some circumstances where the characteristics of a device authorized to use a given MAC address may change, for example, due to software or system updates, or where the MAC address has been reassigned. In these cases, the use of MAC address usage statistics makes it possible to reduce the number of these circumstances which are falsely identified as MAC spoofing attacks. It also makes it possible for the network management device to detect when a malicious device that is using a MAC address of a legitimate device, appears to be the same as the legitimate device in the device fingerprint data, but is using the MAC address in a different one of the networks, or sub-networks.

Determining whether two or more devices are utilizing the common MAC address may be based on: a determination that two devices represented in the device fingerprint data are associated with the common MAC address; and at least one of: a determination that the common MAC address has been used substantially concurrently by two or more devices based on the MAC address usage statistics; or a determination that the two devices associated with the common MAC address in the device fingerprint data are located in the same network based on the MAC address usage statistics.

In this way, additional criteria for identifying whether a MAC address has been used by an unauthorized device may increase the accuracy of the spoofing detection.

Determining whether two or more devices are utilizing a common MAC address may involve generating a confidence score indicative of a confidence that the common MAC address is being used by two or more devices, and performing the predetermined action may be dependent on the confidence score exceeding a threshold confidence score.

Using a confidence score in this manner enables the performance of the MAC spoofing detection to be applied accurately and consistently across devices. The characteristics and/or MAC address usage statistics which are used to identify whether a MAC address is being spoofed may not be the same in every case, and using a confidence score to determine whether a threshold for detecting MAC spoofing has been reached in any given case, enables the method to be applied consistently in real world cases. Additionally, it also provides for tuning of the system to reflect real world performance.

Each record in the device fingerprint data may include a respective fingerprint confidence score indicative of the confidence in the set of characteristics included in the respective record, and the confidence score may be dependent on the fingerprint confidence scores associated with the two or more devices.

Device fingerprint data may in some cases be lacking for particular devices, out of date, or inferred from few messages. In these cases, using a score that represents a fingerprint confidence in these characteristics to influence the confidence score for detecting MAC spoofing may increase the accuracy, and reduce the likelihood that a device will be restricted in the network due to inaccurate fingerprint data.

The fingerprint confidence score for a said record may be determined based on at least one of the following: an amount of data received in messages from the said device that are used to derive the respective set of characteristics; a number of messages used to derive the respective set of characteristics; whether the respective set of characteristics are inferred from the messages or explicitly signaled in the messages; and the type of messages received from the device.

The method may further comprise monitoring network traffic to determine MAC address usage statistics including at least one of: an indication of times at which MAC addresses have been used in the one or more networks; and an indication of which of the one or more networks the MAC addresses are used in, and generating the confidence score may be dependent on the device fingerprint data and the MAC address usage statistics.

If the MAC address usage statistics indicate that the common MAC address has been used substantially concurrently by two devices associated with the common MAC address in the device fingerprint data the confidence score may represent a higher confidence than if the MAC address usage statistics indicate that the common MAC address as not been used substantially concurrently by the two devices associated with the common MAC address in the device fingerprint data.

If the MAC address usage statistics indicate that two devices associated with the common MAC address in the device fingerprint data are located in the same network the confidence score may represent a higher confidence than if the MAC address usage statistics indicate that the two devices associated with the common MAC address in the device fingerprint data are not located in the same network.

The sets of characteristics represented in the device fingerprint data may each include at least one of: a device type; an operating system; an indication of software running on the device; a device model; an identification number associated with the device; and an indication of services provided by the device.

According to a second aspect of the present disclosure there is provided a network management device configured to control one or more networks, the network management device comprising a processor and storage, the storage comprising executable instructions which, when executed by the processor, cause the network device to: monitor network traffic to generate device fingerprint data, the device fingerprint data including a plurality of records, each record associated with one of a plurality of devices in the one or more networks and including a respective MAC address and a set of one or more characteristics associated with a respective device; determine whether two or more devices are utilizing a common MAC address based at least on the device fingerprint data; and perform a predetermined action dependent on the determining whether two or more devices are utilizing the common MAC address.

According to a third aspect of the present disclosure there is provided a non-transitory computer-readable storage medium comprising computer-executable instructions which, when executed by one or more processor, cause the one or more processor to: monitor network traffic to generate device fingerprint data, the device fingerprint data including a plurality of records, each record associated with one of a plurality of devices in the one or more networks and including a respective MAC address and a set of one or more characteristics associated with a respective device; determine whether two or more devices are utilizing a common MAC address based at least on the device fingerprint data; and perform a predetermined action dependent on the determining whether two or more devices are utilizing the common MAC address.

### BRIEF DESCRIPTION OF THE DRAWINGS

In order that the present invention may be more readily understood, examples of the invention will now be described, with reference to the accompanying drawings, in which:
Figure 1 is a schematic diagram of a network management device according to examples;
Figure 2 is schematic diagram of two network environments controlled by the network management device according to examples;
Figure 3 is a flow chart showing a method according to examples;
Figure 4 is a schematic diagram showing device fingerprint data according to examples;
Figure 5 is a schematic flow diagram showing the method according to examples; and
Figure 6 is a schematic diagram showing a non-transitory computer-readable storage medium according to examples.

### DETAILED DESCRIPTION OF CERTAIN INVENTIVE EMBODIMENTS

While MAC addresses are typically assigned by a manufacturer, they can be spoofed, which means a potential attacker can impersonate another device by modifying their MAC address to match a legitimate device's address. This can lead to unauthorized access to a network or fooling network security measures that are based on MAC addresses. MAC addresses are generally transmitted in plain text, which means they can be captured and observed by eavesdroppers in a network.

The IEEE^{™} standard 802.1X is a port-based network access control (PNAC) standard. It provides an authentication mechanism to devices wishing to attach to a local-area network (LAN) or wireless LAN (WLAN). MAC addresses play a crucial role in the authentication process as they are used to identify devices seeking to access the network. The authentication process involves three main entities: the device attempting to access the network, referred to as a client device, the authenticator such as a network access device such as a switch or a wireless access point, and an authentication server such as a RADIUS (Remote Authentication Dial-In User Service) server. During the authentication process, the MAC address of the client device is used to identify it to the authenticator, and the authentication server. Spoofing the MAC address of a device after it has been authenticated in a network may enable a malicious client device to obtain access to the network.

Some devices are not compatible with the 802.1X standard and a common solution for handling these devices in a network is to whitelist them based on their MAC addresses. As such, if a malicious device spoofs a MAC address of one of these whitelisted devices, then the malicious device may bypass the authentication procedure applied to other devices in the network.

Certain examples described herein provide methods and devices that are capable of detecting MAC spoofing attacks and controlling the access of devices which are likely to be performing MAC spoofing. In particular, network management devices, such as Cambium Network's Network Service Edge^{®}, may be configured to determine whether two or more devices are using the same MAC address.

Fingerprinting data, which specifies detected characteristics of devices in the network may be used by the network management devices to determine whether two or more of the devices attached to the network are using the same MAC address. The network management device may be able to monitor communications in the network to determine the characteristics of devices attached thereto. If it is detected that two more devices are using the same MAC address the network management device, may prevent one or more of those devices from communicating to any other device in the network. In this way, the network management device is able to prevent malicious devices from spoofing MAC addresses and having access to the network when they should not.

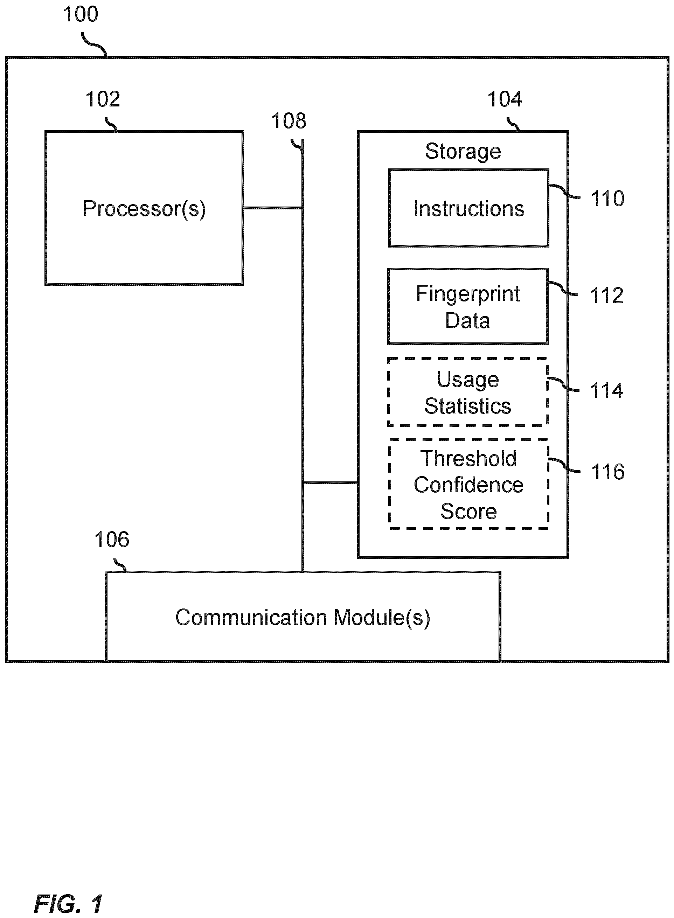

Figure 1 shows an example of a network management device 100 that is configured to control one or more networks according to examples described herein. The network management device 100 comprises one or more processor 102, storage 104, and in some cases one or more communication modules 106. The processor(s) 102, storage 104, and communication module(s) 106 are connected over a communication channel, such as a bus 108, allowing them to communicate with each other.

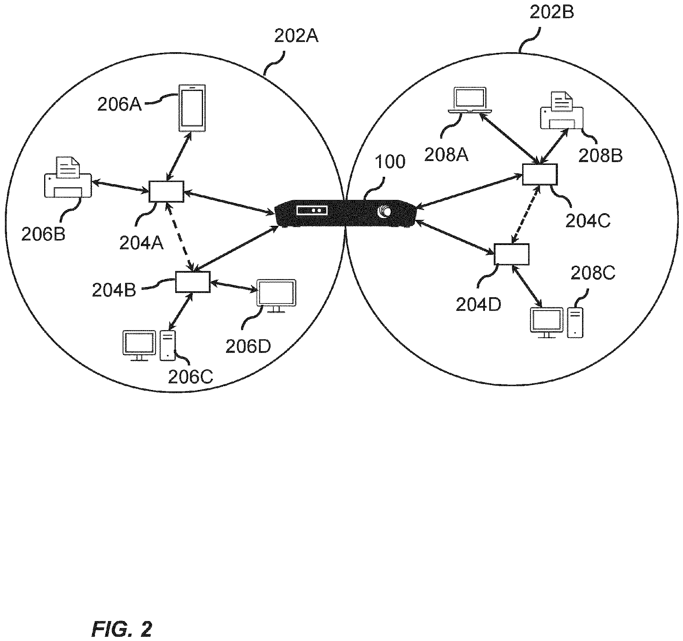

The storage 104 is suitable for storing a set of computer-executable instructions 110 for executing a method 300, which will be described further below with respect to Figures 2 to 5. The storage 104 may also be suitable for storing other types of data such as fingerprint data 112 and, in some examples, MAC address usage statistics 144, and a threshold confidence score 116. The storage 104 may include any combination of volatile and non-volatile storage, for example, a combination of read-only memory (ROM) and one or more types of random-access memory (RAM), such as dynamic RAM, synchronous RAM, and so forth. ROM may be included in the form of both disc-based (e.g. hard drive) or flash memory (e.g. solid state drive(s)).

The processor(s) 102 may include any suitable combination of processing circuitry configured to execute the instructions 110. The processor(s) 102 may include one or more general purpose processors, such as central processing units (CPU), and/or application specific processing circuitry or processing units. The network device 100 may additionally include one or more communications modules 106 configured to enable communication with one or more further computing devices, for example, as part of a network. The communications module(s) 106 may comprise wireless and/or wired communications modules to enable at least one of wired LAN and wireless LAN connectivity. These communications modules 106 may implement known protocols and standards such as Wi-Fi, Bluetooth, Ethernet, and so forth. The network device 100 may be capable of communicating over both local and wide area networks via the communications module(s) 106.

Turning to Figure 2 a network environment in which the network management device 100 may deployed is shown. The network management device 100 is configured to control one or more networks. In the example shown in Figure 2, the network management device 100 is configured to control two networks 202A and 202B. The networks 202A and 202B are local area networks such as that which may be deployed in a home or office environment to enable network computing functions such as file transfer, printing, and so forth. The networks 202A and 202B also include additional network devices 204A to 204D such as switches and access points. The network management device 100 along with the switches and access points 204A to 204D enable communication between a plurality of user devices 206A to 206D and 208A to 208C. The user devices 206A to 206D and 208A to 208C may also be referred to as client devices, computing devices, or simply devices, it will be appreciated that these devices may not be associated with specific users. A distinction is drawn between the network devices 100, 204A to 204D, which operate to enable communication in the network(s) 202A and 202B, and the user devices 206A to 206D and 208A to 208C, which use the network capabilities to communicate amongst each other.

In the example shown in Figure 2, a plurality of device types is shown including printers 206B, smartphones 206A, laptop computers 208A, desktop computers 206C, smart televisions 206D. The devices shown in Figure 2 and connected in the networks 202A and 202B are provided as examples only and it is to be appreciated that a variety of communications enabled computing devices, not shown, may also be connected to the networks 202A and 202B, such as servers, remote storage, and so forth.

The network devices 100, 204A to 204D are communicatively coupled to allow communication between the user devices 206A to 206D and 208A to 208C. In some examples the networks 202A and 202B may be independent of one another, such that the user devices 206A to 206D in the first network 202A are able to communicate with one another, but not with the user devices 208A to 208C located in the second network 202B. This may be the case, for example, where the networks 202A and 202B are separate sub-networks in an office environment, or a school environment. The network devices 204A, 204B, and 100 may be communicatively coupled to allow communication amongst the user devices 206A to 206D in the first network 202A. Similarly, the network devices 204C, 204D, and 100 may be communicatively coupled to allow communication amongst the user devices 208A to 208C in the second network 202B. The network management device 100 may be communicatively coupled to devices in both the first and second network 202A and 202B.

Alternatively, the first and second networks 202A and 202B may be logically managed as two independent sub-networks, but the network management device may enable communication between user device 206A to 206D with the additional devices 208A to 208C.

The network devices 100 and 204A to 204D may implement a number of network functions for managing devices 206A to 206D and 208A to 208C including authentication, bandwidth distribution, message forwarding, and switching. The network devices 100 and 204A to 204D may be the same type of network devices such as wireless access points, though in some cases the network devices 100 and 204A to 204D may be different and include different functionality. For example, the network management device 100 may, in addition to being capable of the same functions of the other network devices 204A to 204D, include network edge device features and include the capability to enable communication into and out of a wide area network, such as the internet. The network management device 100 may be configured to act as a central management device by which the other network devices 204A to 204D may be configured. The other network devices 204A to 204D may be local access points for connecting devices within a specific geographic location to the networks 202A and 202B.

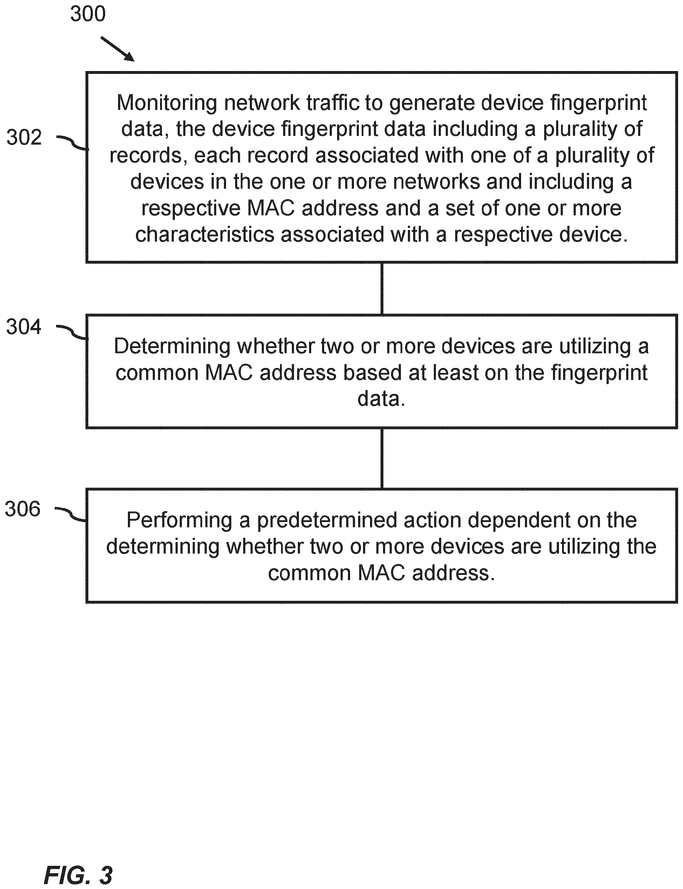

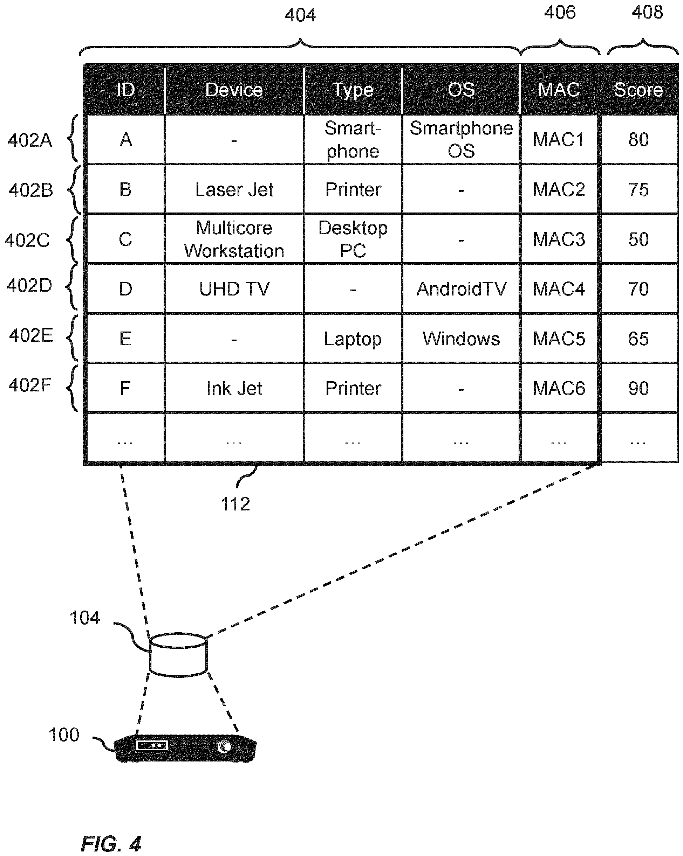

As briefly mentioned above, the storage 104 includes instructions 110 for performing a method 300 in the network management device 100, shown in the flow chart of Figure 3. The method 300 will now be described with respect to Figures 2 to 5. The method 300 includes monitoring 302 network traffic to generate device fingerprint data 112, shown in Figure 4. The device fingerprint data 112 includes a plurality of records 402A to 402F, each record 402A to 402F associated with one of a plurality of devices 206A to 206D and 208A to 208C in the one or more networks 202A and 202B and including a respective MAC address and a set of one or more characteristics associated with a respective device.

The method 300 additionally involves determining 304 whether two or more devices are utilizing a common MAC address based at least on the device fingerprint data 112 and performing 306 a predetermined action dependent on the determining 304 whether two or more devices are utilizing the common MAC address.

As discussed above, MAC spoofing may be used to intercept private communications and/or otherwise gain unauthorized access to a network. By using device fingerprint data 112 it is possible to accurately identify whether there are two devices in a network which are using a common MAC address, which is indicative of the common MAC address having been spoofed. Following the identification of MAC spoofing a predetermined action can be taken to mitigate security risks in the network. Using device fingerprint data 112 to identify whether two separate devices are utilizing a common MAC address provides accurate identification of MAC spoofing, thereby preventing false positive detections of MAC spoofing. Accurate identification of MAC spoofing allows strict security policies to be implemented without negatively impacting the performance of the network.

Turning to Figure 4, there is shown an example of the device fingerprint data 112 including the plurality of records 402A to 402F. Each record 402A to 402F is associated with one of the plurality of devices 206A to 260D and 208A to 208C. Each record 402A to 402F includes a set of one or more characteristics 404 and a MAC address. In the example shown, the sets of characteristics 404 in each record 402A to 402F, include at least one of a device type, an operating system, a device model, an identification number associated with the device (ID), which may be implemented as a number or string. While not shown in Figure 4, it will be appreciated that the sets of characteristics 404 may additionally, or alternatively, include other characteristic types such as an indication of services provided by the device, and an indication of software running on the device. The characteristics for each record 402A to 402F in the device fingerprint data 112 may not include the same types of characteristics for each device 302A to 312A. For example, in the device fingerprint data 112 shown in Figure 4, the set of characteristics associated with a first record 402A includes an ID, device type, and an operating system (OS) while a set of characteristics for a second record 402B includes an ID, device model, OS, a device type, but no operating system.

Monitoring 302 the network traffic to generate the device fingerprint data 112 may include deriving the MAC address 406 and set of characteristics 404 associated with a device 206A of the plurality of devices 206A to 206D and 208A to 208C, from one or more messages received from the device 206A. To obtain these messages, monitoring 302 the network traffic may include at least one of performing passive scans of devices 206A to 206D and 208A to 208C attached to the one or more networks 202A and 202B, and performing active scans of the devices 206A to 206D and 208A to 208C attached to the one or more networks 202A and 202B. By performing passive or active scans, the network management device 100 is able to obtain messages from said devices 206A to 206D and 208A to 208C which can in turn be used to derive characteristics of said devices 206A to 206D and 208A to 208C and their MAC addresses.

Performing passive scans involves receiving communications transmitted between two or more devices 206A to 206D and 208A to 208C in the one or more networks 202A and 202B. For example, this may involve intercepting or reading data contained in messages transmitted between user devices 206A to 206D and 208A to 208C. These messages may be sent during normal operation such as when joining the network, interacting with other devices 206A to 206D and 208A to 208C in the networks 202A and 202B, requesting authentication, and so forth. In some circumstances, metadata contained in the header of these messages may include information that can be used to derive characteristics and MAC addresses for devices 206A to 206D and 208A to 208C.

Performing active scans may involve transmitting a message to a said device 206A to 206D and 208A to 208C in the one or more networks 202A and 202B to trigger a response and receiving the response from the said device 206A to 206D and 208A to 208C in the one or more networks 206A to 206D and 208A to 208C. In this case, the network management device 100 may be able to transmit specific messages which are configured to elicit a response with specific data which is to be used in deriving the set of characteristics of a device. However, performing active scans may also use up network bandwidth, and so will typically be used sparingly as compared to passive scans in the networks 202A and 202B.

The network management device 100 may be configured to process Dynamic Host Configuration Protocol (DHCP) messages and Hyper Text Transfer Protocol (HTTP) user agents from the devices 206A to 206D and 208A to 208C. For example, DHCP Option 55, 60, and the hostname provided in the DHCP message may be used to determine sets of characteristics 404 to be included in the device fingerprint data 112. In particular a response to Option 60 DHCP may provide an indication of an operating system, and a respective version of said operating system being used on the device. While HTTP user agents may provide information indicating software and plugins running on the device. The hostname may include information identifying a device model or name which can be used, for example, based on a lookup, to identify a device model and/or type.

Where passive scans are used to generate the device fingerprint data 112, the network management device 100 may be configured to continuously monitor network traffic to identify characteristics of the devices 206A to 206D and 208A to 208C. The network management device 100 may additionally request that other network devices 204A to 204D forward network traffic from one or more of the devices 206A to 206D and 208A to 208C to generate the device fingerprint data 112. Where active scans are performed, these may be performed at regular intervals, e.g. periodically, or may be performed in response to triggers in the networks 202A and 202B such as the addition of new user devices 206A to 206D and 208A to 208C, an instruction from an administrator, and so forth.

The device fingerprint data 112 may evolve over time as more messages are monitored and/or further passive or active scans are performed. At an initial point in time, such as on deployment of the network management device 100, there may be little information available regarding the device 206A to 206D and 208A to 208C. Over time as more messages are received from the devices 206A to 206D and 208A to 208C, and passive and active scans are performed, the device fingerprint data 112 may be progressively generated.

In some examples, generating the device fingerprint data 112 may involve processing the message obtained via passive and/or active scanning and determining based on data stored therein, what the characteristics of the devices are. In other examples, a third-party service may be used to perform device fingerprinting, whereby device fingerprint data is obtained. For example, the network management device 100 may send data gathered from the active and/or passive scans to a third-party service which may be accessible via the internet and receive the device fingerprint data 112 in response. In other words, device fingerprint data 112 may be obtained by monitoring network traffic and providing associated data to a third-party service.

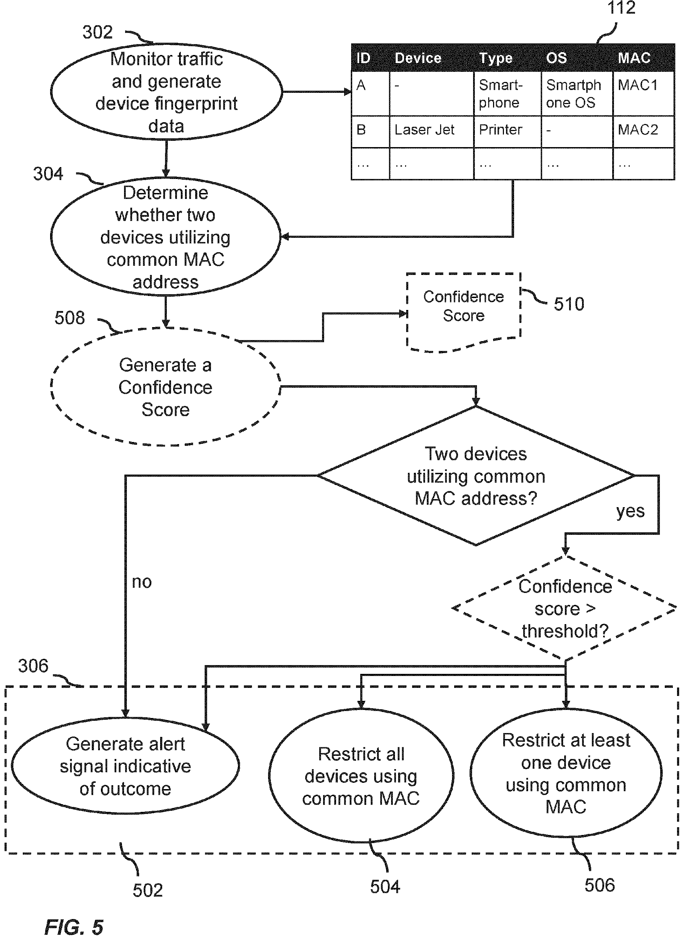

Turning to Figure 5, the flow diagram 500 shows the method 300 and illustrates examples of predetermined actions which may be performed 306 in response to the determining 304 whether two or more devices are utilizing a common MAC address. Three options 502 to 506 for predetermined actions, which may be performed if it is determined that two or more devices 206A to 206D and 208A to 208C are utilizing a common MAC address, are shown in Figure 5. At least one of these options may be performed, and in some examples, a plurality of the options may be performed in response to the determination. The options 502 to 506 include generating 502 an alert signal representative of an outcome of the determining whether the common MAC address is utilized by two or more devices 206A to 206D and 208A to 208C. Additionally, the options 502 to 506 include preventing 504 all devices that are utilizing the common MAC address from communicating with other devices in the one or more networks 202A and 202B. The options 502 to 506 may also include preventing at least one device that is utilizing the common MAC address from communicating with other devices in the one or more networks 202A and 202B.

Preventing devices utilizing a common MAC address from communicating with other devices in the network 206A to 206D and 208A to 208C effectively cuts off access to the network for those devices. Where one of the devices using the common MAC address is not authorized to access the network 202A and/or use the common MAC address preventing it from communicating with other devices prevents the device from intercepting communications and accessing network functions. In some cases, it may be possible to restrict only one of the devices that are using the common MAC address, for example, a malicious device. However, this may require more complex device management and tracking in the network management device 100, and/or intervention from an administrator. Restricting all devices using the common MAC address while potentially negatively affecting network performance for legitimate devices, is more secure and ensures that a malicious device is not allowed to continue communicating with other devices 206A to 206D and 208A to 208C in the networks 202A and 202B.

Generating 502 an alert signal may involve providing the alert signal to a device operated by an administrator, enabling an administrator to monitor the networks 202A and 202B and identify when the use of a common MAC address by two devices is detected and, if desired, intervene or override an action in the network. In some cases, preventing 504 all devices utilizing the common MAC address from communicating with other devices 206A to 206D and 208A to 208C, or preventing 506 at least one of the devices utilizing the common MAC address from communicating with the other devices 206A to 206D and 208A to 208C, may be performed in response to an instruction, or confirmation, from an administrator following the alert signal being provided thereto.

To prevent devices utilizing the common MAC address from communicating with other devices 206A to 206D and 208A to 208C in the one or more networks 202A and 202B the network devices 204A to 204D, which are access points and switches, may be instructed by the network management device 100 to modify their operation. In particular, these network devices 204A to 204D may be instructed to restrict communications that are received from devices utilizing the common MAC address, and to restrict communications that are directed to devices utilizing the common MAC address. The network devices 204A to 204D generally facilitate communication between the user devices 206A to 206D and 208A to 208C and so they may be capable of routing, or not routing, messages between devices 206A to 206D and 208A to 208C.

Determining whether two or more devices are utilizing a common MAC address based at least on the device fingerprint data 112 may involve processing the records 402A to 402F to determine whether two records, representative of different devices, include the same MAC address. It is possible that the characteristics of a device may change over time, and in this case, it is possible that one device is associated with a plurality of records 402A to 402F. This may occur when the software running on a device is updated or otherwise changed. In this circumstance, there may be two records that include the same MAC address, but which also relate to the same device at different moments in time. As such, determining whether two devices are utilizing a common MAC address may involve identifying whether two records 402A and 402B in the device fingerprint data 112 include the same MAC address, and if so, comparing the characteristics of the first record 402A with the characteristics of the second record 402B, to determine whether the devices represented by each record 402A and 402B are the same device or different.

A device fingerprint data 112 cleanup process may be performed which removes records 402a to 402F in the device fingerprint data 1112 after a certain predetermined period. The predetermined period may be a period since the record 402A was created, or since the associated device last communicated with other devices 204A to 204D, 206A to 206D, and 208A to 208C in the networks 202A and 202B.

The network management device 100 may further be configured to determine MAC address usage statistics 114 by monitoring network traffic in the one or more networks 202A and 202B. The MAC address usage statistics 114 may include at least one of an (i) indication of times at which MAC addresses are used in the one or more networks 202A and 202B and (ii) an indication of which network 202A or 202B the MAC addresses are used in.

Determining whether two devices are utilizing a common MAC address may additionally be based on the MAC address usage statistics 114. For example, where two or more records 402A and 402B in the device fingerprint data 112 include a common MAC address, the MAC address usage statistics may be used to determine whether these two records are associated with different devices 206A to 206D and 208A to 208C. As mentioned above, device characteristics may change, and in some cases MAC addresses may be reassigned. Using the MAC address usage statistics 114 makes it possible to identify false positives, such as these scenarios, from cases in which one of the devices is maliciously spoofing a MAC address.

The MAC address usage statistics 114 may be used to determine whether the common MAC address, included in two or more records 402A and 402B, has been used substantially concurrently by two or more devices. For example, whether the MAC address has been used by the two devices at the same time, or within a predefined period, such as an hour, a day, a week, and so forth. If the common MAC address has been used substantially concurrently by two or more devices in the networks 202A and 202B it is more likely that the MAC address is being spoofed by a malicious device. If the common MAC address has not been used substantially concurrently by two more devices in the networks 202A and 202B then the likelihood that the MAC address has been reassigned, or characteristics of the device utilizing the MAC address having changed, may be higher.

The MAC address usage statistics 114 may additionally, or alternatively, be used to determine whether the two devices associated with the common MAC address in the device fingerprint data 112 are located in the same network 202A. Where a common MAC address is used in two different networks 202A and 202B substantially concurrently, it is less likely that the two devices are in fact the same device for which one or more characteristics have changed. Where the two devices are in the same network, and/or the common MAC address has not been used substantially concurrently, there is a lower likelihood that the two records 402A and 402B are associated with different devices. Instead, it may be more likely that the MAC address has been reassigned and/or the characteristics of the device, to which the MAC address is associated, have changed.

Returning to Figure 5, the network management device 100 may be configured, by the instructions 110, to generate 508 a confidence score 510 that is indicative of a confidence that the common MAC address is being used by two or more device 206A to 206D and 208A to 208C. More specifically, but not exclusively, the confidence score may be indicative of a confidence that the common MAC address is being spoofed, or used by an unauthorized device. In this case, performing 306 the predetermined action 502 to 506 may be dependent on the confidence score 510 exceeding a threshold confidence score 116. The threshold confidence score 116 may be received by, or generated in, the network management device 100 based on user input to the device 100 or from an external control device via the communication module(s) 106. The threshold confidence score 116 may be stored in the storage 104 to be accessed when it is needed.

Basing a predetermined action to be performed on a comparison of the confidence score 510 to the threshold 116 makes it possible to more accurately identify whether a MAC address has been spoofed while mitigating a mis-categorization of legitimate MAC address usage. Applying policies which are able to detect MAC spoofing attacks accurately and consistently makes it possible to apply strict security policies, such as restricting devices 206A to 206D and 208A to 208C communicating in the networks 202A and 202B, while mitigating a potential degradation in performance which may otherwise result from such strict security policies.

Each record 402A to 402F in the device fingerprint data 112 may additionally include a respective fingerprint confidence score 408 indicative of a confidence in the set of characteristics 404 that are included in the respective record 402A to 402F. In this case, the confidence score 510, representative of a confidence that two or more devices are using the same MAC address, may be dependent on the fingerprint confidence scores 408 associated with the two devices.

As discussed above, fingerprint data 112 may be continually generated and updated based on the network monitoring. Some of the characteristics derived from the passive and active scanning may be accurate whereas others may be less accurate. Using the fingerprint confidence scores 408 to determine whether two different devices really are using the same MAC address has the effect that where the confidence in the device fingerprint data 112 for one or more of the devices is low, the network management device 100 will not prematurely restrict communication to these devices.

When generating the device fingerprint data 112, the fingerprint confidence score 408 for a given set of characteristics 404 may be determined based on a variety of measures. In a first measure, an amount of data received in the messages from the device 206A that are used to derive the respective set of characteristics 404 may be used to determine the respective fingerprint confidence score 408. For example, where a large amount of data is collected, such as included in several messages, and said data is internally consistent, then the fingerprint confidence score 408 for a given record 402A may be higher. Where a large amount of data is received from the device 206A and said data consistently implies a given characteristic it may be more likely that this given characteristic of said device 206A is an accurate characteristic. If a smaller amount of data is collected and used to derive the set of characteristics 404, then the fingerprint confidence score 408 may be lower as it is easier for a fraudulent or malicious device to replicate smaller amounts of data that imply this characteristic.

Additionally, or alternatively, a number of messages used to derive the set of characteristics 404 for a given record 402A may also be used determine the fingerprint confidence score 408. Where a device 206A is continually sending messages, for example, over an extended period of time, that consistently identify the respective set of characteristics 404 then it may be more likely that said set of characteristics 404 are correct.

In some cases, the set of characteristics 404 for a device 206A may be explicitly signaled in the messages from the device 206A and in other cases some or all of the respective set of characteristics may be inferred based on data included in the messages. This will be dependent on the type of messages being processed to derive the set of characteristics 404. Whether characteristics of the respective set of characteristics 404 are inferred from the messages or explicitly signaled may be used to determine the fingerprint confidence score 408. For example, characteristics which are inferred may be associated with a lower confidence level than characteristics that are explicitly signaled in messages from a device 206A.

The total number of characteristics included in the set of characteristics 404 may also influence the fingerprint confidence score 408. Where the set of characteristics 404 includes a large number of characteristics there may be greater confidence than in cases where there are few characteristics for a given record 402A associated with the device 206A.

The type of messages received from the device 206A, and used to derive the set of characteristics 404, may be used to determine the fingerprint confidence score 408. For example, some messages may be associated with a higher confidence level than other messages. This may be based on intrinsic characteristics of the messages, such as where they are of a specific type which is difficult to replicate or spoof, and/or extrinsic characteristics such as the context in which they are generated, e.g. in response to a passive scan or an active scan.

Generating the fingerprint confidence score may include an assessment of any one or more of these measures. In some cases, the method 300 may involve leveraging whichever of these constraints are available to the network management device 100 to derive a fingerprint confidence score 408. The value of the fingerprint confidence score 408 may be derived based on a weighted sum of a plurality of sub scores. For example, a sub score may be assigned according to an evaluation of any one or more of the measures described above and a weighted sum may be performed to derive the fingerprint confidence score 408. The weighted sum may, in some cases, be a normalized weighted sum in which each measure that contributes to the confidence score is weighted equally. In other examples, an initial value may be generated for the fingerprint confidence score 408 which is then modified based on an evaluation of any one or more of the measures described above.

Generating the confidence score 510 may additionally, or alternatively, be based on the device fingerprint data 112 and the MAC address usage statistics. For example, where the MAC address usage statistics may be processed and used as the basis for modifying the confidence score 510. If the MAC address usage statistics indicate that the common MAC address has been used substantially concurrently by two devices associated with the common MAC address in the device fingerprint data 112 the confidence score 510 may represent a higher confidence than if the MAC address usage statistics indicate that the common MAC address has not been used substantially concurrently by the two devices associated with the common MAC address in the device fingerprint data.

If the MAC address usage statistics indicate that two devices associated with the common MAC address in the device fingerprint data 112 are located in the same network 202A or 202B, the confidence score 510 may represent a higher confidence than if the MAC address usage statistics indicate that the two devices associated with the common MAC address in the device fingerprint data 112 are not located in the same network.

In some examples, an initial confidence score 510 may be generated and said confidence score 510 may be modified based on the device fingerprint data 112 and/or the MAC address usage statistics 114 to determine a final confidence score 510 for comparing against the threshold 116.

Generating the confidence score 510 may alternatively, or additionally, include generating one or more scores associated with the MAC address usage statistics 114 and processing these scores and/or the fingerprint confidence scores 408 to determine the confidence score 510 for comparison with the threshold confidence score 116.

As described above the threshold confidence score 116 may be received from a user input, or an external computing device. In some cases, the threshold confidence score 116 may be static. In other examples, the threshold confidence score 116 may be variable and may be modified, for example, based in changes in the process for generating the confidence score 510, and/or based on network performance. For example, if it is found that the network management device 100 is restricting communication for too many devices 206A to 206D and 208A to 208C based on outcome of the comparison of the confidence scores 510 with the threshold confidence score 116, then the threshold score 116 may be modified, for example raised, to reduce the number of positive identifications of MAC spoofing.

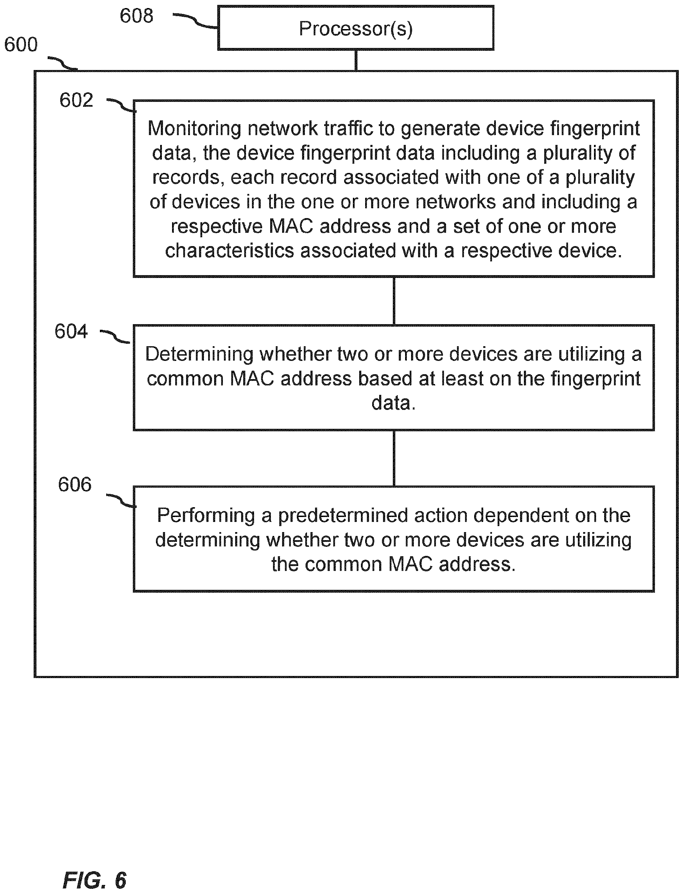

Figure 6 shows an example of a non-transitory computer-readable storage medium 600 comprising computer-executable instructions 602 to 606 which, when executed by one or more processor 608, cause the processor 608 to perform a method 300 as described above. The instructions include an instruction 602 to monitor network traffic to generate device fingerprint data 112, the device fingerprint data 112 including a plurality of records 402A to 402F, each record associated with one of a plurality of devices 206A to 206D and 208A to 208C in the one or more networks 202A and 202B and including a respective MAC address 406 and a set of one or more characteristics 404 associated with a respective device; an instruction 604 to determine whether two or more devices are utilizing a common MAC address based at least on the device fingerprint data 112; and an instruction 606 to perform 210 a predetermined action 502 to 506 dependent on the determining whether two or more devices are utilizing the common MAC address.

According to the above-described embodiments it is possible to monitor network traffic and determine whether a MAC address being used in the network is also being spoofed by one or more additional devices. Applying strict security policies based on the usage of MAC addresses in the network provides increased security performance in the network, preventing malicious attacks and message interception. By using fingerprinting data identifying characteristics of devices, it is also possible to more accurately identify when a MAC address is being spoofed and to reduce the instances of false positive identification of MAC address spoofing which may otherwise occur when a MAC address is reassigned, or when the characteristics of a device using a given MAC address change.

It is to be understood that any feature described in relation to any one example may be used alone, or in combination with other features described, and may also be used in combination with one or more features of any other of the examples, or any combination of any other of the examples. Furthermore, equivalents and modifications not described or shown in the accompanying figures above may also be employed without departing from the scope of the invention, which is defined in the accompanying claims.

### Numbered Clauses

Various aspects of the present disclosure are set out in the following numbered clauses.
1. A computer-implemented method for a network management device configured to control one or more networks, the computer-implemented method comprising:
   monitoring network traffic to generate device fingerprint data, the device fingerprint data including a plurality of records, each record associated with one of a plurality of devices in the one or more networks and including a respective MAC address and a set of one or more characteristics associated with a respective device;
   determining whether two or more devices are utilizing a common MAC address based at least on the device fingerprint data; and
   performing a predetermined action dependent on the determining whether two or more devices are utilizing the common MAC address.
2. The computer-implemented method for a network management device according to clause 1, wherein monitoring network traffic to generate the device fingerprint data includes deriving the MAC address and set of characteristics associated with a said device of the plurality of devices from one or more messages received from said device, and wherein the method includes at least one of:
   performing passive scans of devices attached to the one or more networks to obtain messages from said devices, wherein a passive scan involves receiving communications transmitted between two or more devices in the one or more networks; and
   performing active scans of the devices attached to the one or more networks to obtain messages from said devices, wherein an active scan involves:
      transmitting a message to a said device in the one or more networks to trigger a response; and
      receiving the response from the said device in the one or more networks.
3. The computer-implemented method for a network management device according to clause 1 or clause 2, wherein if it is determined that two or more devices are utilizing the common MAC address, the predetermined action includes at least one of:
   preventing at least one device that is utilizing the common MAC address from communicating with other devices in the one or more networks;
   preventing all devices that are utilizing the common MAC address from communicating with other devices in the network; or
   generating an alert signal representative of an outcome of the determining whether the common MAC address is utilized by two or more devices.
4. The computer-implemented method for a network management device according to clause 3, wherein the one or more networks each include at least one network device configured to connect the devices in the one or more networks, and wherein preventing devices utilizing the common MAC address from communicating with other devices in the one or more networks comprises instructing the at least one network device to:
   restrict communications that are received from devices utilizing the common MAC address; and
   restrict communications that are directed to devices utilizing the common MAC address.
5. The computer-implemented method for a network management device according to clause 3 or clause 4, wherein the method further comprises monitoring network traffic to determine MAC address usage statistics including at least one of:
   an indication of times at which MAC addresses have been used in the one or more networks; and
   an indication of which network the MAC addresses are used in,
   wherein determining whether two or more devices are utilizing the common MAC address is additionally based on the MAC address usage statistics.
6. The computer-implemented method for a network management device of clause 5, wherein determining whether two or more devices are utilizing the common MAC address is based on:
   a determination that two records in the device fingerprint data are associated with the common MAC address; and
   at least one of:
      a determination that the common MAC address has been used substantially concurrently by two or more devices based on the MAC address usage statistics; or
      a determination that the two devices associated with the common MAC address in the device fingerprint data are located in the same network based on the MAC address usage statistics.
7. The computer-implemented method for a network management device according any of clauses 1 to 4, wherein determining whether two or more devices are utilizing a common MAC address involves generating a confidence score indicative of a confidence that the common MAC address is being used by two or more devices, and wherein performing the predetermined action is dependent on the confidence score exceeding a threshold confidence score.
8. The computer-implemented method for a network management device according to clause 7, wherein each record in the device fingerprint data includes a respective fingerprint confidence score indicative of a confidence in the set of characteristics included in the respective record, and wherein the confidence score is dependent on the fingerprint confidence scores associated with the two or more devices.
9. The computer-implemented method for a network management device according to clause 8, wherein the fingerprint confidence score for a said record is determined based on at least one of the following:
   an amount of data received in messages from the said device that are used to derive the respective set of characteristics;
   a number of messages used to derive the respective set of characteristics;
   whether the respective set of characteristics are inferred from the messages or explicitly signaled in the messages; and
   the type of messages received from the device.
10. The computer-implemented method for a network management device according to any of clauses 7 to 9, wherein the method further comprises monitoring network traffic to determine MAC address usage statistics including at least one of:
   an indication of times at which MAC addresses have been used in the one or more networks; and
   an indication of which of the one or more networks the MAC addresses are used in,
   wherein generating the confidence score is dependent on the device fingerprint data and the MAC address usage statistics.
11. The computer-implemented method of clause 10, wherein if the MAC address usage statistics indicate that the common MAC address has been used substantially concurrently by two devices associated with the common MAC address in the device fingerprint data the confidence score will represent a higher confidence than if the MAC address usage statistics indicate that the common MAC address has not been used substantially concurrently by the two devices associated with the common MAC address in the device fingerprint data.
12. The computer-implemented method of clause 10 or clause 11, wherein if the MAC address usage statistics indicate that two devices associated with the common MAC address in the device fingerprint data are located in the same network the confidence score will represent a higher confidence than if the MAC address usage statistics indicate that the two devices associated with the common MAC address in the device fingerprint data are not located in the same network.
13. The computer-implemented method of any preceding clause, wherein the sets of characteristics represented in the device fingerprint data each include at least one of:
   a device type;
   an operating system;
   an indication of software running on the device;
   a device model;
   an identification number associated with the device; and
   an indication of services provided by the device.
14. A network management device configured to control one or more networks, the network management device comprising a processor and storage, the storage comprising executable instructions which, when executed by the processor, cause the network device to:
   monitor network traffic to generate device fingerprint data, the device fingerprint data including a plurality of records, each record associated with one of a plurality of devices in the one or more networks and including a respective MAC address and a set of one or more characteristics associated with a respective device;
   determine whether two or more devices are utilizing a common MAC address based at least on the device fingerprint data; and
   perform a predetermined action dependent on the determining whether two or more devices are utilizing the common MAC address.
15. The network management device according to clause 14, wherein monitoring network traffic to generate the device fingerprint data includes deriving the MAC address and set of characteristics associated with a said device of the plurality of devices from one or more messages received from said device, and wherein the instructions, when executed by the processor, cause the network device to perform at least one of:
   passive scans of the devices attached to the one or more networks to obtain messages from said devices, wherein a passive scan involves receiving communications transmitted between two or more devices in the one or more networks; and
   active scans of the devices attached to the one or more networks to obtain messages from said devices, wherein an active scan involves:
      transmitting a message to a said device in the one or more networks to trigger a response; and
      receiving the response from the said device in the one or more networks.
16. The network management device according to clause 14 or clause 15, wherein if it is determined that two or more devices are utilizing the common MAC address, the predetermined action includes at least one of:
   preventing at least one device that is utilizing the common MAC address from communicating with other devices in the one or more networks;
   preventing all devices that are utilizing the common MAC address from communicating with other devices in the network; or
   generating an alert signal representative of an outcome of the determining whether the common MAC address is utilized by two or more devices.
17. The network management device according to clause 16, wherein the one or more networks each include at least one network device configured to connect the devices in the one or more networks, and wherein preventing devices utilizing the common MAC address from communicating with other devices in the one or more networks comprises instructing the at least one network device to:
   restrict communications that are received from devices utilizing the common MAC address; and
   restrict communications that are directed to devices utilizing the common MAC address.
18. The network management device according to clause 16 or clause 17, wherein the method further comprises monitoring network traffic to determine MAC address usage statistics including at least one of:
   an indication of times at which MAC addresses have been used in the one or more networks; and
   an indication of which network the MAC addresses are used in,
   wherein determining whether two or more devices are utilizing the common MAC address is additionally based on the MAC address usage statistics.
19. The network management device according to clause 18, wherein determining whether two or more devices are utilizing the common MAC address is based on:
   a determination that two records in the device fingerprint data are associated with the common MAC address; and
   at least one of:
      a determination that the common MAC address has been used substantially concurrently by two or more devices based on the MAC address usage statistics; or
      a determination that the two devices associated with the common MAC address in the device fingerprint data are located in the same network based on the MAC address usage statistics.
20. The network management device according to any of clauses 14 to 17, wherein determining whether two or more devices are utilizing a common MAC address involves generating a confidence score indicative of a confidence that the common MAC address is being used by two or more devices, and wherein performing the predetermined action is dependent on the confidence score exceeding a threshold confidence score.
21. The network management device according to clause 20, wherein each record in the device fingerprint data includes a respective fingerprint confidence indicative of a confidence in the set of characteristics included in the respective record, and wherein the confidence score is dependent on the fingerprint confidence scores associated with the two or more devices.
22. The network management device according to clause 21, wherein the fingerprint confidence score for a said record is determined based on at least one of the following:
   an amount of data received in messages from the said device that are used to derive the respective set of characteristics;
   a number of messages used to derive the respective set of characteristics;
   whether the respective set of characteristics are inferred from the messages or explicitly signaled in the messages; and
   the type of messages received from the device.
23. The network management device according to any of clauses 20 to 22, wherein the instructions, when executed by a processor, further cause the network management device to monitor network traffic to determine MAC address usage statistics including at least one of:
   an indication of times at which MAC addresses have been used in the one or more networks; and
   an indication of which of the one or more networks the MAC addresses are used in,
   wherein generating the confidence score is dependent on the device fingerprint data and the MAC address usage statistics.
24. The network management device according to clause 23, wherein if the MAC address usage statistics indicate that the common MAC address has been used substantially concurrently by two devices associated with the common MAC address in the device fingerprint data the confidence score will represent a higher confidence than if the MAC address usage statistics indicate that the common MAC address has not been used substantially concurrently by the two devices associated with the common MAC address in the device fingerprint data.
25. The network management device according to clause 23 or clause 24, wherein if the MAC address usage statistics indicate that two devices associated with the common MAC address in the device fingerprint data are located in the same network the confidence score will represent a higher confidence than if the MAC address usage statistics indicate that the two devices associated with the common MAC address in the device fingerprint data are not located in the same network.
26. A non-transitory computer-readable storage medium comprising computer-executable instructions which, when executed by one or more processor, cause the one or more processor to:
   monitor network traffic to generate device fingerprint data, the device fingerprint data including a plurality of records, each record associated with one of a plurality of devices in the one or more networks and including a respective MAC address and a set of one or more characteristics associated with a respective device;
   determine whether two or more devices are utilizing a common MAC address based at least on the device fingerprint data; and
   perform a predetermined action dependent on the determining whether two or more devices are utilizing the common MAC address.

## Claims

1. A computer-implemented method for a network management device configured to control one or more networks, the computer-implemented method comprising:
monitoring network traffic to generate device fingerprint data, the device fingerprint data including a plurality of records, each record associated with one of a plurality of devices in the one or more networks and including a respective MAC address and a set of one or more characteristics associated with a respective device;
determining whether two or more devices are utilizing a common MAC address based at least on the device fingerprint data; and
performing a predetermined action dependent on the determining whether two or more devices are utilizing the common MAC address.

2. The computer-implemented method for a network management device according to claim 1, wherein monitoring network traffic to generate the device fingerprint data includes deriving the MAC address and set of characteristics associated with a said device of the plurality of devices from one or more messages received from said device, and wherein the method includes at least one of:
performing passive scans of devices attached to the one or more networks to obtain messages from said devices, wherein a passive scan involves receiving communications transmitted between two or more devices in the one or more networks; and
performing active scans of the devices attached to the one or more networks to obtain messages from said devices, wherein an active scan involves:
transmitting a message to a said device in the one or more networks to trigger a response; and
receiving the response from the said device in the one or more networks.

3. The computer-implemented method for a network management device according to claim 1 or claim 2, wherein if it is determined that two or more devices are utilizing the common MAC address, the predetermined action includes at least one of:
preventing at least one device that is utilizing the common MAC address from communicating with other devices in the one or more networks;
preventing all devices that are utilizing the common MAC address from communicating with other devices in the network; or
generating an alert signal representative of an outcome of the determining whether the common MAC address is utilized by two or more devices.

4. The computer-implemented method for a network management device according to claim 3, wherein the one or more networks each include at least one network device configured to connect the devices in the one or more networks, and wherein preventing devices utilizing the common MAC address from communicating with other devices in the one or more networks comprises instructing the at least one network device to:
restrict communications that are received from devices utilizing the common MAC address; and
restrict communications that are directed to devices utilizing the common MAC address.

5. The computer-implemented method for a network management device according to claim 3 or claim 4, wherein the method further comprises monitoring network traffic to determine MAC address usage statistics including at least one of:
an indication of times at which MAC addresses have been used in the one or more networks; and
an indication of which network the MAC addresses are used in,
wherein determining whether two or more devices are utilizing the common MAC address is additionally based on the MAC address usage statistics.

6. The computer-implemented method for a network management device of claim 5, wherein determining whether two or more devices are utilizing the common MAC address is based on:
a determination that two records in the device fingerprint data are associated with the common MAC address; and
at least one of:
a determination that the common MAC address has been used substantially concurrently by two or more devices based on the MAC address usage statistics; or
a determination that the two devices associated with the common MAC address in the device fingerprint data are located in the same network based on the MAC address usage statistics.

7. The computer-implemented method of any preceding claim, wherein the sets of characteristics represented in the device fingerprint data each include at least one of:
a device type;
an operating system;
an indication of software running on the device;
a device model;
an identification number associated with the device; and
an indication of services provided by the device.

8. A network management device configured to control one or more networks, the network management device comprising a processor and storage, the storage comprising executable instructions which, when executed by the processor, cause the network device to:
monitor network traffic to generate device fingerprint data, the device fingerprint data including a plurality of records, each record associated with one of a plurality of devices in the one or more networks and including a respective MAC address and a set of one or more characteristics associated with a respective device;
determine whether two or more devices are utilizing a common MAC address based at least on the device fingerprint data; and
perform a predetermined action dependent on the determining whether two or more devices are utilizing the common MAC address.

9. The network management device according to claim 8, wherein monitoring network traffic to generate the device fingerprint data includes deriving the MAC address and set of characteristics associated with a said device of the plurality of devices from one or more messages received from said device, and wherein the instructions, when executed by the processor, cause the network device to perform at least one of:
passive scans of the devices attached to the one or more networks to obtain messages from said devices, wherein a passive scan involves receiving communications transmitted between two or more devices in the one or more networks; and
active scans of the devices attached to the one or more networks to obtain messages from said devices, wherein an active scan involves:
transmitting a message to a said device in the one or more networks to trigger a response; and
receiving the response from the said device in the one or more networks.

10. The network management device according to claim 8 or claim 9, wherein determining whether two or more devices are utilizing a common MAC address involves generating a confidence score indicative of a confidence that the common MAC address is being used by two or more devices, and wherein performing the predetermined action is dependent on the confidence score exceeding a threshold confidence score, and
optionally, wherein each record in the device fingerprint data includes a respective fingerprint confidence indicative of a confidence in the set of characteristics included in the respective record, and wherein the confidence score is dependent on the fingerprint confidence scores associated with the two or more devices.

11. The network management device according to claim 10, wherein the fingerprint confidence score for a said record is determined based on at least one of the following:
an amount of data received in messages from the said device that are used to derive the respective set of characteristics;
a number of messages used to derive the respective set of characteristics;
whether the respective set of characteristics are inferred from the messages or explicitly signaled in the messages; and
the type of messages received from the device.

12. The network management device according to claim 10 or claim 11, wherein the instructions, when executed by a processor, further cause the network management device to monitor network traffic to determine MAC address usage statistics including at least one of:
an indication of times at which MAC addresses have been used in the one or more networks; and
an indication of which of the one or more networks the MAC addresses are used in,
wherein generating the confidence score is dependent on the device fingerprint data and the MAC address usage statistics.

13. The network management device according to claim 12, wherein if the MAC address usage statistics indicate that the common MAC address has been used substantially concurrently by two devices associated with the common MAC address in the device fingerprint data the confidence score will represent a higher confidence than if the MAC address usage statistics indicate that the common MAC address has not been used substantially concurrently by the two devices associated with the common MAC address in the device fingerprint data.

14. The network management device according to claim 12 or claim 13, wherein if the MAC address usage statistics indicate that two devices associated with the common MAC address in the device fingerprint data are located in the same network the confidence score will represent a higher confidence than if the MAC address usage statistics indicate that the two devices associated with the common MAC address in the device fingerprint data are not located in the same network.

15. A non-transitory computer-readable storage medium comprising computer-executable instructions which, when executed by one or more processor, cause the one or more processor to:
monitor network traffic to generate device fingerprint data, the device fingerprint data including a plurality of records, each record associated with one of a plurality of devices in the one or more networks and including a respective MAC address and a set of one or more characteristics associated with a respective device;
determine whether two or more devices are utilizing a common MAC address based at least on the device fingerprint data; and
perform a predetermined action dependent on the determining whether two or more devices are utilizing the common MAC address.
